# EUROPEAN PATENT SPECIFICATION

(11) **EP 0 839 778 B1**
(45) Date of publication and mention of the grant of the patent: **09.05.2001**
(21) Application number: 97118752.1
(22) Date of filing: 28.10.1997
(51) Int. Cl.: C04B 38/00, C12N 11/14

(54) **Porous ceramics composite material and method of making the same**
Keramisches poröses Verbundmaterial und Verfahren zu seiner Herstellung
Matériau céramique composite poreux et procédé pour sa fabrication

(30) Priority: 01.11.1996 JP 29134496
(43) Date of publication of application: 06.05.1998
(73) Proprietor: Filtec Kabushiki Kaisha, Minato-ku, Tokyo (JP)
(72) Inventor: Ohta, Kazuhira, Nagoya-shi, Aichi-ken (JP); Koitabashi, Kenichi, c/o Filtec K.K., 1-chome, Minato-ku, Tokyo (JP)
(74) Representative: Körber, Wolfhart, Dr. rer.nat.

(56) References cited:
- DATABASE WPI Week 9119 Derwent Publications Ltd., London, GB; AN 91-137316 XP002053908 & JP 03 075 256 A (TOYO TECHNICA KK)
- DATABASE WPI Week 8816 Derwent Publications Ltd., London, GB; AN 88-107715 XP002053909 & JP 63 054 945 A (SAKAI S)
- DATABASE WPI Week 7250 Derwent Publications Ltd., London, GB; AN 72-79029T XP002053910 & JP 47 047 566 B (KONDO H)
- DATABASE WPI Week 9636 Derwent Publications Ltd., London, GB; AN 96-358406 XP002053911 & JP 08 169 745 A (SASAKI M)

## Description

### TECHNICAL FIELD

The present invention relates to a porous ceramics composite material and a method of making the same, more particularly a porous ceramics composite material which can be utilized in the field of drain or wastewater treatment and a method of making the same.

### BACKGROUND ART

In the past, in treating the drain or wastewater, particularly drain or wastewater containing animal and vegitable fats and oils, by using a ceramics type oil-adsorbing material, porous ceramics having lipophilic property were utilized and further the porous ceramics, in which inherently combined hydrophillic property was changed to hydrophobic property, were utlized to thereby enhance the efficiency of oil adsorption.

In addition, there was known a combined system of the porous ceramics and enzyme or bacteria to thereby enhance the treatment efficiency of drain. For instance, there were known a method of treating the drain wherein the ceramics are put in the drain to be treated and the enzyme in the form of liquid is fed or dosed into the drain, and a method of treating the drain by using the ceramics to which the enzyme or bacteria are adsorbed and immobilized. As the other immobilization method, there were known a method of immobilizing the enzyme or bacteria of a freeze-spheroidized form on a photosetting resin such as epoxy resin, urethane resin or the like, and a method of immobilizing the bacteria of a freeze-spheroidized form on aluginic acid or carrageenan (a so-called inclusive immobilization method) etc.

In all the above-mentioned prior arts, the treatment process sludge generated have been disposed as an industrial waste at an intermediate treatment distinct. Also the adsorption of oil to the ceramics is a physical adsorption, and thus when the ceramics were saturated with the oil, they were recovered and regenerated.

In case of the drain treatment system using the conventional ceramics oil-adsorbing material as mentioned above, some problems arise that the treatment efficiency of drain is low, that the installation work of a treatment device is not simply or easily and is very expensive, and that regeneration of the ceramics and operation and maintenance for disposing the sludge as the industrial waste are very expensive. The treatment of the drain, for instance, from a kitchen and a food factory etc. (a treatment step from a so-called grease trap to a removal device, i.e. preparation facility for discharge) costs a very great deal. Therefore, it is required in business establishments to develop the treatment system which can be simply and easily installed at low cost and use a compact treating material with high treatment efficiency.

In addition, problems arise that domestic drain or wastewater drains into rivers, lakes, ponds, sea or the like for its pollution, or soaks into the ground and thus enters the underground water for its pollution, whereby the natural environment is deteriorated and thus the water quality of the intake raw water for public water supply is deteriorated. The solution of these problems is required.

As to the quality of the treated water, n-hexane extracts as well as dissolved BOD of the treated water must be improved over those of the drain before being treated, and a pH value must lie within standard values. For the conventional physical treatment, however, there is a limit in ability of the drain treatment.

Furthermore, in case of treating the drain by using a combination of the porous ceramics and the enzyme, when the enzyme in the form of liquid is dosed in the drain to be treated, it is difficult to stably control an amount of the enzyme to be dosed and the continuous feed of the enzyme solution costs a very great deal. A diffusion coefficient of the enzyme in the drain becomes lower and bacteria are inhibited as the enzyme concentration in the drain to be treated becomes higher. Thus, in the case that biological treatment is performed particularly by using the bacteria, it is difficult to stably treat the drain. If the amount of enzyme to be dosed is low, the effect of the drain treatment cannot be naturally expected. Also the effect of die drain treatment using the bacteria- or enzyme-immobilized ceramics as mentioned above and that of the drain treatment due to the bacteria- or enzyme-immobilized photosetting resin are maintained only for a short time such as about 1 - 3 years. In case of the alginic acid immobilization process, the effect of the drain treatment is maintained only for a short time such as about 6 months.

Accordingly, an object of the present invention is to obviate the above-mentioned problems and provide a porous ceramics composite material in which properties and performance of ceramics and enzyme are sufficiently utilized with high treatment efficiency of the drain or wastewater and which is not expensive, and to provide a method of making the same.

### DISCLOSURE OF THE INVENTION

According to the present invention there is provided a porous ceramics composite material which comprises mixing and calcining 80 - 40 wt.% of clay and quartzite as a main component, 20 - 60 wt.% of an enzyme preparation and a prescribed amount of water, and the composition is as follows:

| | |
|---|---|
| SiO₂ | 68.0 - 71.0 wt.% |
| Al₂O₃ | 16.0 - 21.0 wt.% |
| Fe₂O₃ | 0.8 - 1.2 wt.% |
| K₂O | 1.1 - 1.7 wt.% |
| CaO | 0.6 - 1.2 wt.% |
| MgO | 1.5 - 2.6 wt.% |
| Na₂O | 0.6 - 1.3 wt.% |
| TiO₃ | 0.3 - 0.4 wt.% |
| Enzyme | 0.005 - 0.02 wt.% |

The porous ceramics composite material according to the present invention can be made by adding a binder, a pore-forming material, the enzyme preparation and water to the clay and quartzite and mixing to form a mixture of muddy state or slurry, and then calcining the mixture at temperatures ranging from about 900 - 1350°C, preferably about 1000 - 1200°C to make the porous ceramic composite material having the above-mentioned composition.

The above-mentioned enzyme preparation is preferably an enzyme preparation containing enzymes extracted from fruit juice, e.g. pineapple juice.

As mentioned above, the porous ceramics composite material according to the present invention is a sintered material composed of the ceramics raw material and the enzyme preparation, and exerts the following effects in treating the drain or wastewater.
(1) The effect of removing poisonous or toxic substances contained in the drain is extremely excellent. The pH values of effluent can be easily adjusted, and thus the pH value of the effluent can meet the effluent standard, i.e. pH of 5.8 - 8.6.
(2) The drain treatment can be performed in a short time.
(3) The treatment effect can be semipermanently kept.
(4) The maintenance for the drain treatment system will be in principle required only one time or less per year.
(5) The drain treatment system can be compact in size.
(6) It is not necessary to back-wash the ceramics composite material and thus there is no loss in weight of the material.
(7) The ceramics composite material can be made at low calcining temperature and thus it is possible to lower the production cost.
(8) An amount of sludge generated can be extremely reduced.

### DETAILED DESCRIPTION OF PREFERRED EMBODIMENTS

### Embodiments of the present invention will be hereinafter described in more detail.

The porous ceramics composite material of the present invention is made by mixing quartzite and clay as a main component of ceramics with an enzyme preparation, usual additives and water and calcining a mixture thus obtained at prescribed temperature. The resulting porous ceramics composite material has hydrophile and lipophile properties. For instance, in case of using the composite material for the purpose of treating drain or wastewater, the enzyme decomposes the fats and oils adsorbed to the composite material during the treatment process, whereby the performance of the composite material is recovered to the previous level, and thus the composite material has the advantage of continuously recovering the intended function in a state where the composite material is put in the drain. For the reason, aeration can be additionally performed during the drain treatment under a state where the porous ceramics composite material is put in the drain, whereby high clarification or decontamination of the drain to be treated is permanently performed by action of aerobic bacteria of the natural world existing in the drain and the composite material does not show loadings. According to the present invention, therefore, it is possible to adjust the pH value to a desired value and attain the lower BOD value in a short time, which could not be attained by the drain treatment using the conventional ceramics oil-adsorbing material, and further it is not almost necessary to regenerate the ceramics composite material and the amount of the sludge generated is extremely reduced.

The drain or wastewater treatment using the porous ceramics composite material of the present invention has the advantage that odor of the treated water itself and an ambient atmosphere when treating the drain or wastewater is remarkedly reduced, because the treatment is performed according to a complete oxidation process.

The quartzite and clay for use in the present invention have, for instance, the following composition, respectively, though being varied depending on places of the resources.

| Quartzite(wt.%) | | Clay(wt.%) | |
|---|---|---|---|
| SiO₂ | 96.00 | SiO₂ | 40.0 |
| Al₂O₃ | 1.09 | Al₂O₃ | 40.0 |
| Fe₂O₃ | 0.15 | Fe₂O₃ | 0.8 - 0.9 |
| K₂O | 1.50 | CaO | 0.7 |
| Ignition Loss | 0.26 | MgO | 0.55 |
| | | Ignition Loss | 12.0 |

The particle size and blending proportion of above-mentioned quartzite and clay are adjusted as desired and used in the present invention, for instance, the particle size being adjusted to 250 - 300 mesh and the quartzite and clay being blended at the weight % equal to each other.

The above-mentioned enzyme preparation can be prepared by mixing a combination of a specific enzyme(s) and several minerals with powders of an ore such as zeolite or the like to obtain a mixture and then allowing the mixture to be subjected to a fermentation treatment. The enzyme penetrates fine pores of the zeolite or the like so that it can stand high temperature. Thus, in the calcining step of obtaining the desired ceramics composite material, the mixture is sintered in such a way that the enzyme is enwrapped by or included in the ceramics, to thereby make it possible to most suitably immobilize the enzyme.

As to the enzyme, there can be used several enzymes having high-temperature resistance according to the purposes for which they are used. For instance, for the purpose of treating the drain or wastewater, it is preferred to use the pineapple enzyme which is produced by incubating a strain of Aspergillus genus in the pineapple juice which is followed by extracting it from the culture. The pineapple enzyme produced is a mixture of many kind of enzymes acting on many objective substances, which is known generically as "dehydrogenase". To the enzyme mixture thus extracted, an another enzyme may be suitably added according to the application. The above-mentioned enzyme preparation includes, for instance, ENZYME·P and ENZYME·G (a trade name, Toyo Enzyme Corp.) or the like.

The porous ceramics composite material of the present invention is obtained by mixing the main raw material comprising quartzite and clay, the enzyme preparation containing the high-temperature resistant enzyme preparation (which shows generally activity at temperatures ranging from -40 °C to +1300°C), the binder, the pore-forming material, the other known additives and water to form a mixture of muddy state or slurry, and then calcining the mixture or slurry at high temperature.

Next, the preferable method of making the porous ceramics composite material of the present invention will be described.

First, the powdered quartzite and clay as mentioned above are mixed in a prescribed ratio, in general in a ratio of about 50 - 65 : 50 - 35 by weight, preferably about 65 : 35 by weight, in consideration of the coagulation power after the calcination, to prepare a base composition. Then, to 80 - 40 wt.% (preferably 70 - 50 wt.%) of the base composition, 20 - 60 wt.% (preferably 30 - 50 wt.%) of the powdered enzyme preparation according to the usage is added, and is sufficiently agitated to obtain a desired mixture. The mixture outside the above-mentioned ratio is difficult to attain the prescribed object. Above 60 wt. % of the enzyme preparation, the resulting ceramics composite material has too high specific gravity, lower porosity, bad hydrophile properties (water adsorbing capacity), and high cost, whereas below 20 wt.% of the enzyme preparation, it is impossible to attain sufficient action of the enzymes.

Thereafter, the above mixture is mixed with the usual pore-forming material in the prescribed ratio and sufficiently agitated, and then water is added thereto preferably in an amount of about 4 - 4.5 times as much as the base composition while agitating to form the mixture or slurry. The slurry thus formed is filled within a mold frame having any shape, such as a plate, block or the like, according to the application, subjected to air-drying and/or forced drying to be molded into a desired shape. Then, the resulting molded product is calcined generally at about 900 - 1350 °C, preferably about 1000 - 1200°C, and more preferably about 1100°C, whereby the pore-forming material therein is consumed by fire and as a result a number of interconnected fine pores are formed and simultaneously some kinds of minerals and zeolite which are contained in the base composition and the enzyme preparation are sintered and integrated to give the finish ceramics composite material. If the above calcining temperature is below about 900°C, the good coagulation power is not obtained and thus the shape is destroyed, whereas above about 1350°C, the surface of the ceramics is vitrified which is not preferable.

The composite material thus obtained has the composition as mentioned above and the following properties.

| | |
|---|---|
| Specific Gravity | about 0.4 - 0.5 |
| Porosity Ratio | about 65 - 83 % |

Furthermore, Fe₂O₃ contained in the porous ceramics composite material of the present invention is within a range of 0.85 - 1.15 wt.%, which corresponds to the original amount in the raw material. If the amount increases by the addition of an Fe containing material thereto, it is attended by a bad effect that the propagation of the microorganism is depressed and becomes inactive, and lastly the organism dies out.

As to the above-mentioned pore-forming material, there can be in general used the material which is sufficiently dispersed in the above-mentioned base composition and enzyme preparation powder, and is completely burnt out and consumed at a temperature for calcining these raw materials to form the interconnected fine pores. For instance, sawdust, chaff (rice hulls), camphor or the like can be used. It is preferred to use the sawdust in consideration of the state of the interconnected fine pores formed, the condition for burning out the material and the like. In case of using the sawdust, an amount thereof to be used is suitably about 2 times as much as the sum weight of the base composition and the powdered enzyme preparation and is appropriately increased and decreased considering the state of the interconnection fine pores and the specific gravity of the composite material obtained. In addition, an amount of water to be added to form the sllury (muddy state) is appropriately about 4 - 4.5 times as much as that of the base composition

Next, the present invention will be in detail described with reference to the following nonlimiting working examples.

### Example 1

(1) Making of a porous ceramics composite material containing 50 wt.% of powders of enzyme preparation:
250 Kg of quartzite, 250 kg of clay, 500 kg of enzyme preparation powder (a trade name: ENZYME P, Toyo Enzyme Corp.), 1000 kg of sawdust and 4300 kg of water were provided. First, the quartzite and clay were charged and mixed in a pot mill or the like, further the enzyme preparation powder was charged therein and sufficiently mixed under agitation. Then, the sawdust was charged therein and mixed in such a manner as uniformly dispersed and thereafter the water was added thereto while agitating to form slurry. The resulting slurry composition was cast into a mold frame, and air-dried for 5 days and further force-dried at about 130°C for one day, and then withdrawn from the mold. Then the dried molded product was put into a calcining furnace which was followed by rising the temperature gradually, and was calcined and sintered at the maximum temperature of 1100°C for 3 hours. After lowering the furnace temperature, the sintered product was withdrawn from the furnace.
The ceramics composite material of the present invention, which was produced under the conditions as mentioned above, has the following specific gravity and composition, and could be advantageously used as a material for the drain treatment as mentioned below.

| | |
|---|---|
| Specific gravity | 0.4 - 0.5 |
| SiO₂ | 70.4 wt.% |
| Al₂O₃ | 17.7 wt.% |
| Fe₂O₃ | 1.1 wt.% |
| K₂O | 1.5 wt.% |
| CaO | 1.0 wt.% |
| MgO | 1.8 wt.% |
| Na₂O | 1.1 wt.% |
| TiO₃ | 0.3 wt.% |
| Enzyme | 0.01 wt.% |

(2) Using the above-mentioned porous ceramics composite material which was made by mixing and calcining the enzyme preparation in the ratio of 50 wt.%, the drain or wastewater treatment was performed.

The drain to be treated was taken from residence water within a grease trap chamber in a drain treatment system in operation. The residence water contains n-hexane extracts at a high concentration.

20 L of the above residence water was charged, as raw water to be tested, into a container having φ 300 mm × H 500 mm, and a cylindrical tube having φ 100 mm × H 250 mm, in which 500 g of the above ceramics composite material was filled, was disposed at 150 mm distance under the surface of water of the center portion of the container. A blower (capacity: 6 L/minute) was provided with the center portion of the ceramics composite material filled. The drain treatment was performed at the room temperature always under aeration, and samples to be tested were taken every day elapsed as shown in Table 1 and analyzed. The results are shown in Table 1.

**Table 1**

| Contact oxidation process with aeration (change with day) | | | | |
|---|---|---|---|---|
| Day | pH | SS (ppm) | BOD (ppm) | n-hexane (ppm) |
| Raw Water | 4.0 | 2460 | 3060 | 19,000 |
| 1 day | 6.3 | 17 | 181 | 14 |
| 2 day | 6.8 | 17 | 68 | 7 |
| 3 day | 7.2 | 13 | 49 | 1R |

### Example 2

The same procedures as used in Example 1 - (1) were repeated to give the desired ceramics composite material, except that 200 kg of quartzite, 200 kg of clay and 600 kg of enzyme preparation powder were used and the calcining step was performed at temperature of 1000°C. Using the composite material thus obtained (the sintered composite material in which 60 wt.% of the enzyme preparation was mixed.), the same procedures as used in Example 1 - (2) were repeated, except that samples to be tested were taken every day as shown in Table 2 to be analyzed. The results are shown in Table 2.

**Table 2**

| Contact oxidation process with aeration (change with hour) | | | | |
|---|---|---|---|---|
| Time | pH | SS (ppm) | BOD (ppm) | n-hexane (ppm) |
| 0 hr. | 5.2 | 350 | 2,880 | 18,000 |
| 3 hrs. | 6.1 | 57 | 359 | 83 |
| 6 hrs. | 6.3 | 46 | 302 | 69 |
| 9 hrs. | 6.4 | 23 | 219 | 27 |
| 24 hrs. | 7.0 | 9 | 94 | 2 |

As seen from the data listed in Tables 1 and 2, within 1 day after initiating the treatment, pH became neutral and SS, BOD and n-hexane extracts extremely decreased. Therefore, the treated or purified water thus obtained sufficiently met the effluent standard. In fact, about 300∼200 ppm of n-hexane extract is generally contained in the drain which is discharged as industrial wastewaters from food factories.

### Example 3

Drain treatment which was performed using the porous ceramics composite material obtained in Example 1 was compared with the conventional drain treatments as shown in Table 3, with respect to an amount of sludge generated. The results are shown in Table 3.

**Table 3**

| Drain Treatment | Amount of Sludge generated after Treatment for BOD and SS of Influent |
|---|---|
| Activated Sludge Process | 40 wt.% |
| Vinyl Chloride Honeycomb Contact Process | 12 - 15 wt.% |
| Anaerobic Enzyme Process | 60 wt.% |
| Contact Oxidation Process due to Porous Ceramics Composite Material of The Present Invention | 2.5 wt.% |

As seen from the data listed in Table 3, in the drain treatment using the porous ceramics composite material of the present invention, the amount of sludge generated was extremely reduced as compared with that of the sludge generated in the conventional drain treatment process.

### Example 4

The same procedures as used in Example 1 - (1) were repeated to give the desired ceramics composite material in which 20 wt.% of the enzyme preparation was mixed and calcined, except that 480 kg of quartzite, 320 kg of clay and 200 kg of enzyme preparation powders were used and the calcining step was performed at temperature of 1200°C. Using the composite material thus obtained, the same procedures as used in Example 1 - (2) were repeated, except that the raw water to be tested was intermediate water which was obtained after the drain discharged from the grease trap chamber was subjected to a floatation separation in a sedimentation and separation tank and contained 7 ppm of n-hexane extract, and that samples to be tested were taken every day elapsed as shown in Table 4 and analyzed. The results are shown in Table 4.

**Table 4**

| Day | pH | SS (ppm) | BOD (ppm) | n-hexane (ppm) |
|---|---|---|---|---|
| Raw Water | 6.0 | 23 | 242 | 7 |
| 3 day | 7.3 | 10 | 18 | 1R |
| 2 week | 7.6 | 4 | 22 | 1R |

As seen from the data listed in Table 4, within 3 days after initiating the treatment, pH became neutral and SS, BOD and n-hexane extract extremely decreased. Therefore, the treated or purified water thus obtained sufficiently met the effluent standard.

### Example 5

The same procedures as used in Example 1 - (1) were repeated to give the desired ceramics composite material, except that 390 kg of quartzite, 210 kg of clay and 400 kg of enzyme preparation powders were used and the calcining step was performed at temperature of 1000°C. Using the composite material thus obtained, the same procedures as used in Example 1 - (2) were repeated, except that the raw water to be tested was intermediate water which was obtained after the drain discharged from the grease trap was subjected to a floatation separation in a sedimentation and separation tank and contained 31 ppm of n-hexane extract, and that samples to be tested were taken every day elapsed as shown in Table 5 and analyzed. The results are shown in Table 5.

**Table 5**

| Day | pH | SS (ppm) | BOD (ppm) | n-hexane (ppm) |
|---|---|---|---|---|
| Raw Water | 6.0 | 50 | 238 | 31 |
| 1 day | 7.0 | 6 | 26 | 1R |
| 2 days | 7.4 | 3 | 12 | 1R |

As seen from the data listed in Table 5, within 1 day after initiating the treatment, pH became neutral and SS, BOD and n-hexane extract extremely decreased. Therefore, the treated or purified water thus obtained sufficiently met the effluent standard.

## Claims

1. A porous ceramics composite material which comprises mixing 80 - 40 wt.% of clay and quartzite as a main component, 20 - 60 wt.% of an enzyme preparation and a prescribed amount of water to form a mixture and calcining the mixture, and the composition thereof is as follows:
| | |
|---|---|
| SiO₂ | 68.0 - 71.0 wt.% |
| Al₂O₃ | 16.0 - 21.0 wt.% |
| Fe₂O₃ | 0.8 - 1.2 wt.% |
| K₂O | 1.1 - 1.7 wt.% |
| CaO | 0.6 - 1.2 wt.% |
| MgO | 1.5 - 2.6 wt.% |
| Na₂O | 0.6 - 1.3 wt.% |
| TiO₃ | 0.3 - 0.4 wt.% |
| Enzyme | 0.005 - 0.02 wt.% |

2. The porous ceramics composite material as defined in claim 1, wherein the enzyme preparation is an enzyme preparation containing enzymes extracted from fruit juice.

3. The porous ceramics composite material as defined in claim 2, wherein the fruit juice is pineapple juice.

4. A method of making a porous ceramics composite material which comprises adding a binder, a pore-forming material, an enzyme preparation and water to clay and quartzite and mixing to form a mixture, and then calcining the mixture at temperatures ranging from 900-1350°C to make the porous ceramic composite material having the following composition:
| | |
|---|---|
| SiO ₂ | 68.0 - 71.0 wt.% |
| Al₂O₃ | 16.0 - 21.0 wt.% |
| Fe₂O₃ | 0.8 - 1.2 wt.% |
| K₂O | 1.1 - 1.7 wt.% |
| CaO | 0.6 - 1.2 wt.% |
| MgO | 1.5 - 2.6 wt.% |
| Na₂O | 0.6 - 1.3 wt.% |
| TiO₃ | 0.3 - 0.4 wt.% |
| Enzyme | 0.005 - 0.02 wt.% |

5. The method of making a porous ceramics composite material as defined in claim 4, wherein the calcining temperature ranges from 1000-1200°C.

6. The method of making a porous ceramics composite material as defined in claim 4 or 5, wherein the enzyme preparation is an enzyme preparation containing enzymes extracted from fruit juice.

7. The method of making a porous ceramics composite material as defined in claim 6, wherein the fruit juice is pineapple juice.

## Patentansprüche

1. Poröses Keramikkompositmaterial, welches umfaßt ein Mischen von 80-40 Gew.-% an Ton und Quarzit als Hauptkomponente, 20-60 Gew.-% einer Enzymzubereitung und einer vorgegebenen Wassermenge, um eine Mischung zu ergeben, und Kalzinieren der Mischung, und wobei dessen Zusammensetzung ist wie folgt:
| | |
|---|---|
| SiO₂ | 68,0 - 71,0 Gew.-% |
| Al₂O₃ | 16,0 - 21,0 Gew.-% |
| Fe₂O₃ | 0,8 - 1,2 Gew.-% |
| K₂O | 1,1 - 1,7 Gew.-% |
| CaO | 0,6 - 1,2 Gew.-% |
| MgO | 1,5 - 2,6 Gew.-% |
| Na₂O | 0,6 - 1,3 Gew.-% |
| TiO₃ | 0,3 - 0,4 Gew.-% |
| Enzym | 0,005 - 0,02 Gew.-%. |

2. Poröses Keramikkompositmaterial gemäß Anspruch 1, wobei die Enzymzubereitung eine Enzymzubereitung ist, die Enzyme, die aus Fruchtsaft extrahiert sind, enthält.

3. Poröses Keramikkompositmaterial gemäß Anspruch 2, wobei der Fruchtsaft Ananassaft ist.

4. Verfahren zum Herstellen eines porösen Keramikkompositmaterials, welches umfaßt ein Zugeben eines Bindemittels, eines porenbildenden Materials, einer Enzymzubereitung und Wasser zu Ton und Quarzit und Mischen, um eine Mischung zu bilden, und nachfolgendes Kalzinieren der Mischung bei Temperaturen im Bereich von 900-1350°C, um ein poröses Keramikkompositmaterial herzustellen, das die folgende Zusammensetzung aufweist:
| | |
|---|---|
| SiO₂ | 68,0 - 71,0 Gew.-% |
| Al₂O₃ | 16,0 - 21,0 Gew.-% |
| Fe₂O₃ | 0,8 - 1,2 Gew.-% |
| K₂O | 1,1 - 1,7 Gew.-% |
| CaO | 0,6 - 1,2 Gew.-% |
| MgO | 1,5 - 2,6 Gew.-% |
| Na₂O | 0,6 - 1,3 Gew.-% |
| TiO₃ | 0,3 - 0,4 Gew.-% |
| Enzym | 0,005 - 0,02 Gew.-%. |

5. Verfahren zum Herstellen eines porösen Keramikkompositmaterials gemäß Anspruch 4, wobei die Kalziniertemperatur im Bereich von 1000-1200°C liegt.

6. Verfahren zum Herstellen eines porösen Keramikkompositmaterials gemäß Anspruch 4 oder 5, wobei die Enzymzubereitung eine Enzymzubereitung ist, die Enzyme, die aus Fruchtsaft extrahiert sind, enthält.

7. Verfahren zum Herstellen eines porösen Keramikkompositmaterials gemäß Anspruch 6, wobei der Fruchtsaft Ananassaft ist.

## Revendications

1. Matériau composite céramique poreux, qui comprend le mélange de 80 à 40 % en poids d'argile et de quartzite en tant que principal constituant, de 20 à 60 % en poids d'une préparation enzymatique, et d'une quantité donnée d'eau pour former un mélange, et la calcination du mélange, la composition de celui-ci étant la suivante :
| | |
|---|---|
| SiO₂ | 68,0 - 71,0 % en poids |
| Al₂O₃ | 16,0 - 21,0 % en poids |
| Fe₂O₃ | 0,8 - 1,2 % en poids |
| K₂O | 1,1 - 1,7 % en poids |
| CaO | 0,6 - 1,2 % en poids |
| MgO | 1,5 - 2,6 % en poids |
| Na₂O | 0,6 - 1,3 % en poids |
| TiO₃ | 0,3 - 0,4 % en poids |
| Enzyme | 0,005 - 0,02 % en poids |

2. Matériau composite céramique poreux selon la revendication 1, dans lequel la préparation enzymatique est une préparation enzymatique contenant des enzymes extraites de jus de fruit.

3. Matériau composite céramique poreux selon la revendication 2, dans lequel le jus de fruit est le jus d'ananas.

4. Procédé de fabrication d'un matériau composite céramique poreux, qui comprend l'addition d'un liant, d'un matériau porogène, d'une préparation enzymatique et d'eau à de l'argile et de la quartzite, et le mélange pour former un mélange, puis la calcination du mélange à des températures allant de 900 à 1350 °C pour obtenir le matériau composite céramique poreux ayant la composition suivante :
| | |
|---|---|
| SiO₂ | 68,0 - 71,0 % en poids |
| Al₂O₃ | 16,0 - 21,0 % en poids |
| Fe₂O₃ | 0,8 - 1,2 % en poids |
| K₂O | 1,1 - 1,7 % en poids |
| CaO | 0,6 - 1,2 % en poids |
| MgO | 1,5 - 2,6 % en poids |
| Na₂O | 0,6 - 1,3 % en poids |
| TiO₃ | 0,3 - 0,4 % en poids |
| Enzyme | 0,005 - 0,02 % en poids |

5. Procédé de fabrication d'un matériau composite céramique poreux selon la revendication 4, dans lequel la température de calcination va de 1000 à 1200 °C.

6. Procédé de fabrication d'un matériau composite céramique poreux selon la revendication 4 ou 5, dans lequel la préparation enzymatique est une préparation enzymatique contenant des enzymes extraites de jus de fruit.

7. Procédé de fabrication d'un matériau composite céramique poreux selon la revendication 6, dans lequel le jus de fruit est le jus d'ananas.
